Europäisches Patentamt

European Patent Office

Office européen des brevets

(11) Publication number: **0 365 579 B1**

## EUROPEAN PATENT SPECIFICATION

(45) Date of publication of patent specification: **24.03.93**    (51) Int. Cl.5: **B29C 67/14**, B29C 67/18

(21) Application number: **88905921.8**

(22) Date of filing: **07.07.88**

(86) International application number:
**PCT/GB88/00498**

(87) International publication number:
**WO 89/00495 (26.01.89 89/03)**

(54) MOULDING METHOD.

(30) Priority: **10.07.87 GB 8716315**
        **20.08.87 GB 8719718**

(43) Date of publication of application:
**02.05.90 Bulletin  90/18**

(45) Publication of the grant of the patent:
**24.03.93 Bulletin  93/12**

(84) Designated Contracting States:
**AT BE CH DE FR GB IT LI LU NL SE**

(56) References cited:
**WO-A-85/02365        DE-A- 1 704 194**
**DE-A- 3 511 610        FR-A- 1 527 814**
**US-A- 2 913 036        US-A- 4 560 523**

(73) Proprietor: **3-D COMPOSITES LIMITED**
**Henneymore House, 7-11 Manor Row**
**Bradford BD1 4 TB(GB)**

(72) Inventor: **NEWTON, J. Newton Associates**
**Brackenthwaite House**
**Black Beck Wood Storrs Park, Bowness-**
**on-Windermere**
**Cumbria LA23 3LS(GB)**

(74) Representative: **Wharton, Peter Robert et al**
**Urquhart-Dykes & Lord Alliance House 29-31**
**Kirkgate**
**Bradford West Yorkshire, BD1 1OB (GB)**

Rank Xerox (UK) Business Services
(3.10/3.5x/3.0.1)

## Description

This invention relates to a method of moulding and in particular relates to a method of moulding complex articles from curable resins.

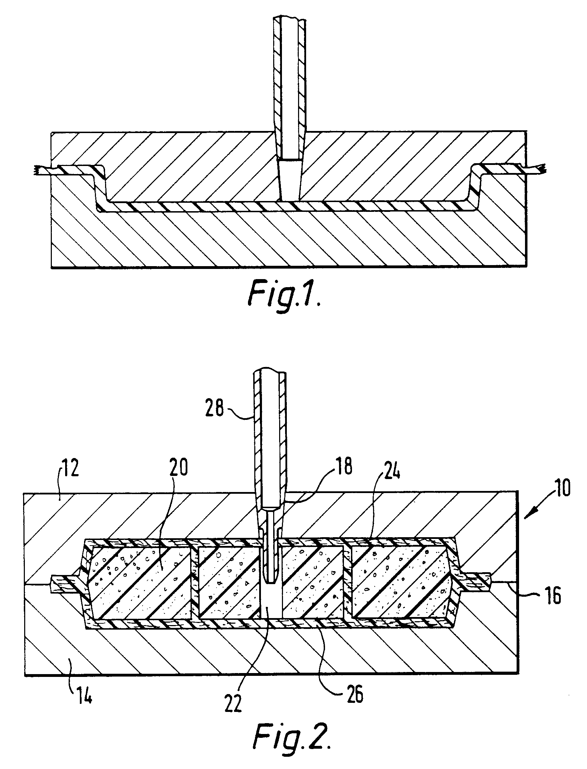

A common method of moulding composite articles, known as the resin transfer moulding process, involves placing a structure of reinforcing fibres, for example glass, carbon or aramid, into a mould and then injecting a liquid resin into the mould so that it penetrates though the entire reinforcing structure. The resin then cures producing a resin/fibre composite with good mechanical properties and relatively low weight. The final mechanical properties depend on the type of reinforcing fibre and resin employed. A conventional arrangement for transferring resin from a resin injection machine into the fibres in a mould is shown in figure 1 of the accompanying drawings. The nozzle from the resin injection machine is clamped to the injection port of the mould and pressurised resin is fed from the injection machine, entering the reinforcing fibres at the injection port. On large mouldings more than one port may be used but this presents problems as the resin cures in the feed system and means must be provided for removing the cured resin.

In recent years there has been a significant increase in the possible complexity of mouldings made by the resin transfer moulding process brought about by the introduction of preforming which allows the assembly of complex configurations of reinforcing fibres together with, for example, the use of foamed plastics material inserts. Cycle times are normally quite long and the degree of complexity limited as the fibre reinforcement restricts the flow and these are primary restriction to an otherwise versatile process.

Composite structures of fibres in a polymer matrix offer low weight, high strength solutions to many engineering problems and their use in application is rapidly growing, particularly in military applications and in the automotive and aircraft industries. Composites, typically of glass or carbon fibres in a thermoset or thermoplastic polymer matrix, have tensile strengths comparable with steels, densities in the region of 20% to 25% of steel, and a low modulus. It is the low modulus that is one of the major problems facing designers who must compensate by increasing section sizes in order to gain higher values of second moment of area. Very often large increases are needed to provide equivalent stiffness compared to steel and this demands complex, often three dimensional, structures.

Complex three dimensional structures are therefore what the designer must employ to meet the structural demands of the product. These, however, are not technically easy to produce or are prohibitively expensive owing to the long cycle times required.

There is a need therefore for an improved form of moulding process applicable to composite articles which will reduce cycle times, and hence costs, in the production of complex structures. The present invention seeks to provide such an improved method.

According to the present invention there is provided a method of moulding complex composite articles as defined in Claim 1 appended hereto.

The use of a gallery or galleries in a core, which is otherwise resin-impermeable, allows resin to be ducted to wherever needed according to the mould configuration by employing a single resin injection nozzle. It is preferred that the injection nozzle is inserted into the gallery or one of the galleries in the core. The layer will often be in the form of a 'skin' surrounding the core, and in this case it is preferred that the nozzle is inserted through the skin of the article to be moulded into the gallery. On completion of the injection cycle the nozzle is removed prior to the resin curing and the injection port is plugged. The method of the invention allows very complex structures to be produced and cycle times reduced.

The main function of the core normally is to space the skins apart and prevent resin from filling the void between the skins. Any material which withstands the the forces imposed when closing the mould and the injection pressure of resin will in general be adequate. Thus cores are employed in relatively thick mouldings and are usually of a closed-cell foamed plastics material, e.g. foamed polyurethane or polyester, for convenience, lightness and cheapness. They may however be of any other desired material such as plaster, wood, wax, and the like. Core materials such as wax offer the possibility of removal after moulding, by melting out. Hollow polymer cores, which could be pressurised, offer the possibility of moulding components such as fuel tanks into the composite article. However, where the article is relatively thin and no core would be needed for the above purposes, then the 'core' and the gallery may be one and the same. That is, the 'core' may be present simply to define one or more galleries in the fibre layer.

While the above discussion has referred to a 'resin' it will be appreciated that the process of the invention is equally applicable to other forms of moulding composites, for example metal matrix composites where ceramic fibres are contained within a mould and molten metal is injected into the cavity containing the ceramic fibres. The term 'resin' is to be construed accordingly.

Additionally or alternatively to employing galleries in the core galleries can be provided in the fibres which make up the skin portion. These can be physical galleries, for example tubes inserted into, or holes cut through the fibrous layer, or preferably may be incorporated into the actual weave of the fibre layer. For example a row or rows of weft or warp rovings can be omitted from the weave leaving a gap which will in effect provide a gallery. Alternatively individual or small numbers of warp or weft rovings may be significantly smaller than the principal rovings again leaving a void space which acts as a gallery inducting the resin. However, especially in the latter case, it is preferred to use such galleries in addition to galleries formed in the mould core. It is the properties of the fibres used as reinforcing for composite materials, that is their relative stiffness, which ensures that such voids or galleries woven in retain their integrity under the conditions of moulding. The degree of compacting and the fact that the fibres are trapped in the mould accentuate this property.

In order to produce composite products which can be considered as structural members, that is having a high strength to weight ratio and being capable of replacing steel components, the following criteria will normally have to be fulfilled. These are that the reinforcing fibres are long and preferably continuous; orientation of the fibre being possible; and fibre density being high, preferably in the region of 60% by weight of the moulded portion of the composite, or more To achieve the above it is necessary to pack the fibres into the mould very tightly. This considerably restricts the flow of resin and, indeed, at useful levels of reinforcing fibre the voids between them are in fact so small that they may be considered as capillaries. This being the case the voids are subject to the laws of fluid flow that apply to capillaries. In simple terms this means that the surface tension forces become more significant than the pressure used to force the polymer through the fibre layer and hence these control the rate of fluid flow.

It can be shown that when the internal diameter of a tube becomes small the force that can be applied to a fluid within it becomes very small and tends to zero. This is because the force applied is a function of pressure times area and since area reduces with the square of the diameter, as the diameter decreases the area decreases even more rapidly. The viscous resistance to flow through a narrow tube is given as follows.

P applied + P surface tension = P viscous resistance.

If P applied is small, that is where the effective diameter is small, it can be ignored and then

$$\theta + \frac{4\,T\,\cos\theta}{d} = \frac{32\,\mu l\,v}{d^2}$$

Where

v = fluid velocity
T = surface tension
$\theta$ = angle of contact
d = diameter of tube
l = length of tube
$\mu$ = viscosity

Solving for v we get

$$V = \frac{T d \cos\theta}{8\,\mu l}$$

In any given situation T, d, and are constant and therefore the velocity of flow of resin is inversely proportional to the viscosity and the length of the tube. There are limitations to what can be achieved in lowering the viscosity for a given material. In the case of polymers, heating reduces viscosity but only to a limited extent. Hence if v, the fluid velocity is to be kept as high as possible then l, the tube length, must be kept to a minimum. It is the provision of galleries in the method according to the invention which enables l to be kept to a minimum within the fibre layer.

A further consideration is as follows. When a resin injection nozzle comes into contact with the fibre reinforcement layer, in effect only the area of the capillaries within the fibrous layer that project into the area of the nozzle is available to transfer liquid into the fibres. Because of the nature of fibre laminates, in reality most of the fluid that enters the laminate would do so via the capillaries that are available around the circumference of the nozzle. There is therefore a circular line of penetration through which the liquid enters the fibre laminate and it is the length of this line that becomes more important than the nozzle area. In the method according to the invention employing galleries of the type described more fully hereinafter, the lines of penetration are effectively very long. This again increases the rate of fluid flow into the fibre structure as will be apparent from the above discussion. The 'galleries' employed to duct resin throughout the composite to be moulded should have sufficiently large dimensions so as to avoid the restrictions on flow rates associated with capillary flow conditions thus allowing the resin to be ducted throughout the composite in a rapid manner enabling complex three dimensional articles to be produced in very much reduced cycle times. Furthermore, it is not necessary to employ high pressures in the method of the invention. As is apparent from the above discussion even high pressures do not significantly reduce cycle times where capillary flow conditions exist. Moreover high pressures require massive moulds and ancillary equipment, and therfore increase moulding costs. Typically the process of the invention will employ pressures of no more than 6-bar and often pressures of less than 3-bar.

The invention will be described further, by way of example, with reference to the accompanying drawings, in which:

Figure 1 is a diagrammatic cross sectional view of a mould used for conventional resin transfer moulding;

Figure 2 is a similar view to figure 1 of a mould adapted to carry out the method of the invention;

Figure 3 is a diagrammatic representation of a complex shape capable of being produced in accordance with the method of the invention;

Figure 4 is a partial view of mould illustrating another embodiment of the invention; and

Figure 5 is a partial view of a mould illustrating a different type of gallery.

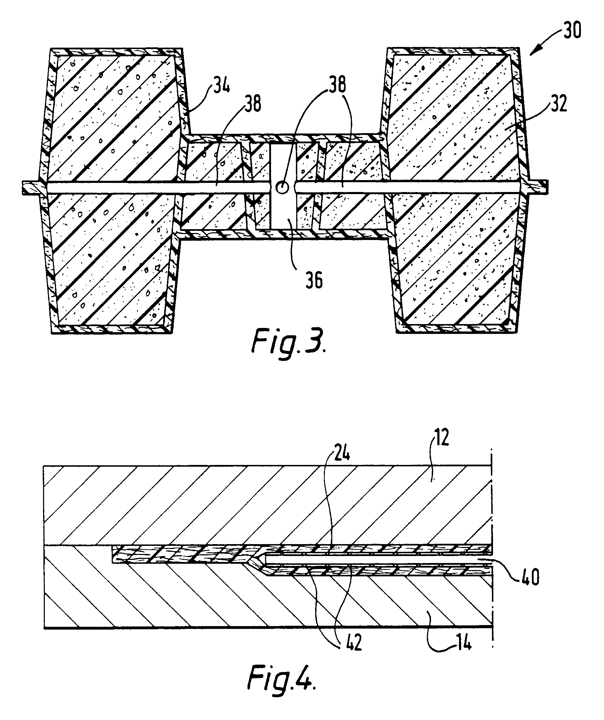

Referring to the drawings, and especially figures 2 and 3, it can be seen that a mould 10 for producing a shape such as that shown in figure 2 comprises upper and lower mould halves 12, 14 respectively split at 16 and a single injection port 18. Resin-impenetrable cores 20 of, for example, closed cell foamed plastics material, are placed within the mould cavity surrounded by, for example, layers of reinforcing fibres such as glass, carbon or kevlar, which will form 'skins' in the eventual composite in a similar manner to conventional moulding processes. However, in accordance with the invention, the core 20 has a void or gallery 22 centrally therein between upper skin 24 and lower skin 26.

An injection nozzle 28 is adapted to pass through the infection port 18 into the gallery 22. Injection of resin into the gallery 22 ensures that it is evenly distributed between the upper 24 and lower 26 skins simultaneously. Side vents (not shown) distributed about the split line 16 ensure that air displaced by the resin can leave the mould cavity.

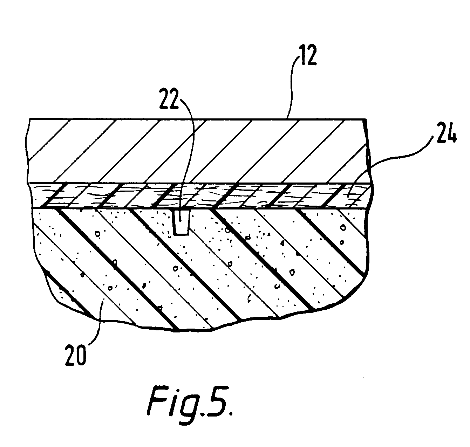

The apparently simple expedient of providing the gallery 22 within the core 20 ensures that resin is ducted simultaneously to the upper and lower skins 24, 26 and reduces the maximum length that the resin will have to flow through the skins to approximately the mould width or radius. Furthermore, since the gallery width is greater than the nozzle outlet diameter, and since there are now two outlets into the fibre layer instead of one, the line of penetration is considerably increased - by approximately a factor of four - thus allowing resin to be injected into the fibre layer at four times the rate. Thus by the method of the invention and employing the single injection nozzle 28 there is a considerable improvement over having two injection nozzles, one on either side of the mould, that might have been employed in the conventional resin transfer moulding methods with the consequent increase in cost and complexity. If it is desired to reduce cycle times even further, additional galleries can be employed, for example of the type illustrated in figure 5 and discussed hereinafter. Improvements in resin transfer rate can be orders of magnitude greater than conventional methods can achieve.

Once injection of the resin is complete the injection nozzle 28 is withdrawn and the port 18 is plugged after which the resin is cured or allowed to cure. Demoulding in a conventional manner produces an article visually almost indistinguishable from that produced by a conventional mould and yet the injection time has been considerably reduced over that necessary if no gallery had been provided.

In figure 3, a moulded product of relatively complex shape is illustrated which would be difficult or impossible to mould satisfactorily employing conventional methods. The product 30 comprises a foam core 32 and outer skin 34. The core 32 has a vertical gallery 36 and four horizontal galleries 38 connecting therewith. The galleries 36, 38 ensure that a resin delivered from a single injection nozzle placed into the gallery 36 will be fed to the remote parts of the mould, allowing a uniform and swift injection of resin. Naturally, resin hardening in the galleries 36, 38 after injection is not a disadvantage - as it would be were the resin to harden in galleries or runs provided externally of the product from which it would need to be cleaned prior to the next moulding procedure.

An especial advantage of the process of the invention is that it allows experimentation to find the optimum form of gallery system very cheaply. In a conventional mould, should it be decided that the shape being moulded is too complex for a single entry of resin then either additional entry ports must be cut or external runs or galleries cut into the mould body. Needless to say this is time consuming and expensive particularly if several configurations have to be tried before the optimum is found. With the method of the invention galleries need merely be cut in the plastics material foam core which is a very much simpler, quicker and cheaper operation. Thus the optimum configuration can be found rapidly and cheaply. There is available an empirical statistical technique for design optimisation which can be applied to the design of the galleries known as the 'Taguchi' method. The method of the invention lends itself admirably to such an approach since changes in configuration can be made rapidly and cheaply. The gallery network could be modelled on computer and the flow characteristics simulated in order to arrive at an optimum design.

While the term 'galleries' has been used herein it will be appreciated that the resin flow passages need not necessarily be totally enclosed within the core. Thus, some or all of the 'galleries' could be at the surface of the mould core and be bounded by the reinforcing fibres constituting the skin. Such a configuration is illustrated in figure 5. In such a case it is preferred that the 'galleries' be sufficiently narrow so that the skin portion does not deflect or distort into them. The stiffness of the fibres employed enables them to 'bridge' a narrow gap. The galleries are still formed in the core rather than the mould so that the advantages of the invention are still obtained. Such surface galleries may advantageously be in the form of a fan or web of interconnecting channels, and may be connected to one or more internal galleries. Galleries of the type shown in figure 5 allow the resin to be distributed throughout the article whilst simultaneously providing lines of penetration for the resin to enter the fibre structure. Galleries incorporated in the weave of the structure exhibit the same property.

Turning now to figure 4, an embodiment is illustrated in which a gallery 40 is effectively formed within the fibrous layer 24. In this case the gallery 40 comprises a tubular core having a series of exit ports 42 to enable the resin to diffuse into the fibrous layer 24 along its length as well as at each end.

Although the method has been described in relation to resin transfer moulding, it will be appreciated that it is of broader applicability and may be used with any moulding process that employs an internal core to limit and distribute a settable composition to specific areas only. While it is in no way restricted to such an application, the process of the invention is particularly useful in producing the articles described and claimed in European Patent Publication No. 0147050.

EXAMPLE

In order to mould a manhole cover in accordance with the above European patent, a mould of nominal dimensions 600mm x 600mm x 76.5mm was employed. In this were placed 13 cores of closed-cell polyurethane foam surrounded by glass fibre layers to form approximately 62% by weight of the composite portion of the eventual cover.

The central core was provided with a gallery similar to that shown in figure 2 hereof, and resin was injected into the gallery so as to run into the top and bottom surfaces of the mould simultaneously. Ten kilograms of isophthalic polyester resin was injected over 7 minutes at a temperature of 40°C. After curing and demoulding a strong integral product was produced capable of supporting the weights required in service as a manhole cover. This product could not be succesfully produced in realistic moulding times using conventional methods. If the gallery network is extended, by providing four surface galleries in each of the top and bottom faces of the core 20, leading from the central gallery 22, the injection time can be reduced further, to approximately two minutes.

The method of the invention provides a simple, relatively inexpensive and speedy method of producing relatively complex shapes by resin injection.

**Claims**

1. A method of moulding complex composite articles, for use as structural members, having a layer containing fibres to be injected with a resin (as hereinbefore defined) and a core portion which comprises providing one or more galleries in the core or fibre layer and injecting resin directly into the gallery or galleries by inserting a nozzle through a port into the gallery whereby it is rapidly transmitted to all portions of the layer, and thereafter withdrawing the nozzle and plugging the port before the resin cures or is allowed to cure.

2. A method as claimed in claim 1 from which the core is a resin impermeable foamed plastics material.

3. A method as claimed in claim 2 in which at least one gallery is provided in the core.

4. A method as claimed in any of claims 1 to 3 in which at least one gallery is provided in the fibres of the layer.

5. A method as claimed in any of claims 1 to 4 in which the gallery is at the surface of the mould core and is bounded by the reinforcing fibre layer constituting a skin.

6. A method as claimed in any of claims 1 to 5 in which the fibres in the layer comprise glass, carbon, aramid or the like.

7. A method as claimed in any of claims 1 to 6 in which the core comprises a closed cell foamed polyester or polyurethane plastics material.

8. A method as claimed in any of claims 1 to 7 in which the density of fibres in the moulded portion of the composite produced is at least 60% by weight.

9. A method as claimed in any of claims 1 to 8 in which the fibres are long and preferably continuous.

10. A method as claimed in any of claims 1 to 9 wherein the gallery provides a line or lines of penetration into the layer.

## Patentansprüche

1. Verfahren zum Formen komplexer verbundgegenstände zur Verwendung als Konstruktionsteile, die eine Fasern enthaltende Schicht, in die ein Harz (wie vorstehend definiert) zu injizieren ist, und einen Kernbereich haben, wobei das Verfahren folgende Schritte aufweist: Vorsehen eines Kanals oder mehrerer Kanäle in dem Kern oder der Faserschicht und Injizieren von Harz direkt in den Kanal oder die Kanäle durch Einführen einer Düse durch eine Öffnung in den Kanal, so daß das Harz sehr schnell zu allen Bereichen der Schicht durchgelassen wird, und anschließendes Herausziehen der Düse und Verschließen der Öffnung, bevor das Harz hart wird oder sein Härten zugelassen wird.

2. Verfahren nach Anspruch 1, wobei der Kern ein harzundurchlässiger Schaumkunststoff ist.

3. Verfahren nach Anspruch 2, wobei wenigstens ein Kanal in dem Kern vorgesehen wird.

4. Verfahren nach einem der Ansprüche 1 bis 3, wobei wenigstens ein Kanal in den Fasern der Schicht vorgesehen ist.

5. Verfahren nach einem der Ansprüche 1 bis 4, wobei der Kanal an der Oberfläche des Formkerns ist und von der Verstärkungsfaserschicht begrenzt ist, die eine Haut bildet.

6. Verfahren nach einem der Ansprüche 1 bis 5, wobei die Fasern in der Schicht Glas, Kohlenstoff, Aramid oder dergleichen aufweisen.

7. Verfahren nach einem der Ansprüche 1 bis 6, wobei der Kern einen geschlossenzelligen Polyester- oder Polyurethan-Schaumkunststoff aufweist.

8. Verfahren nach einem der Ansprüche 1 bis 7, wobei die Dichte der Fasern in dem geformten Bereich des hergestellten Verbundgegenstands wenigstens 60 Gew.-% ist.

9. Verfahren nach einem der Ansprüche 1 bis 8, wobei die Fasern lang und bevorzugt endlos sind.

10. Verfahren nach einem der Ansprüche 1 bis 9, wobei der Kanal eine Penetrationslinie oder Penetrationslinien in die Schicht bildet.

## Revendications

1. Procédé de moulage d'articles composites complexes, destinés à être utilisés en tant qu'éléments structurels et comportant une couche, qui contient des fibres et dans laquelle une résine (telle que définie ci-dessus) doit être injectée, et une partie formant noyau, ce procédé consistant à ménager un ou plusieurs couloirs dans le noyau ou la couche de fibres et à injecter la résine directement dans le ou les couloirs en introduisant une buse, à travers un orifice, jusque dans le couloir, de sorte que cette résine est rapidement transmise à toutes les parties de la couche, puis à retirer la buse et à obturer l'orifice avant que la résine ne durcisse ou qu'on ne la laisse durcir.

2. Procédé suivant la revendication 1, selon lequel le noyau est une matière plastique cellulaire imperméable à la résine.

3. Procédé suivant la revendication 2, selon lequel il est ménagé au moins un couloir dans le noyau.

4. Procédé suivant l'une quelconque des revendications 1 à 3, selon lequel il est ménagé au moins un couloir dans les fibres de la couche.

5. Procédé suivant l'une quelconque des revendications 1 à 4, selon lequel le couloir est réalisé à la surface du noyau du moule et est délimité par la couche de fibres de renfort constituant une peau.

6. Procédé suivant l'une quelconque des revendications 1 à 5, selon lequel les fibres de la couche sont constituées de verre, carbone, aramide ou analogue.

7. Procédé suivant l'une quelconque des revendications 1 à 6, selon lequel le noyau est constitué d'une matière plastique en mousse de polyester ou polyuréthanne à cellules fermées.

8. Procédé suivant l'une quelconque des revendications 1 à 7, selon lequel la densité des fibres dans la partie moulée du produit composite est égale à au moins 60 % en poids.

9. Procédé suivant l'une quelconque des revendications 1 à 8, selon lequel les fibres sont longues et de préférence continues.

10. Procédé suivant l'une quelconque des revendications 1 à 9, selon lequel le couloir offre une ou plusieurs lignes de pénétration dans la couche.

Fig.1.

Fig.2.

*Fig.3.*

*Fig.4.*

Fig.5.